Europäisches Patentamt

European Patent Office

Office européen des brevets

(11) Veröffentlichungsnummer : **0 058 972**
**B1**

# (12) EUROPÄISCHE PATENTSCHRIFT

(45) Veröffentlichungstag der Patentschrift :
30.01.85

(51) Int. Cl.⁴ : **B 23 B 27/08**, B 23 B 27/16,
B 23 C 5/22

(21) Anmeldenummer : **82101304.2**

(22) Anmeldetag : **19.02.82**

(54) Schneidwerkzeug für die spanabhebende Bearbeitung.

(30) Priorität : 19.02.81 DE 3106120

(43) Veröffentlichungstag der Anmeldung :
01.09.82 Patentblatt 82/35

(45) Bekanntmachung des Hinweises auf die Patenterteilung : 30.01.85 Patentblatt 85/05

(84) Benannte Vertragsstaaten :
BE CH FR GB IT LI NL SE

(56) Entgegenhaltungen :
DE-A- 2 018 469
DE-C-     48 470
FR-A-    704 452
GB-A-    112 692
GB-A-    115 161
GB-A-    980 364
GB-A- 1 193 236
US-A- 1 342 745
US-A- 1 342 746
US-A- 1 935 511
US-A- 2 374 879
ISCAR Prospekt Steh-Dreh-System, SELF 1980
Werkstatt und Betrieb 1978, S. 297

(73) Patentinhaber : ISCAR Hartmetall GmbH
Eisenstockstrasse 14 Postfach 14 47
D-7505 Ettlingen-Ettlingenweier (DE)

(72) Erfinder : Kemmer, Klaus
Am Gänsberg 31
D-7271 Wildberg (DE)

(74) Vertreter : Engel, Friedrich-Wilhelm, Dipl.-Phys.
Stephanienstrasse 32
D-7500 Karlsruhe (DE)

## Beschreibung

Technisches Gebiet der Erfindung

Die Erfindung betrifft ein Schneidwerkzeug für die spanabhebende Bearbeitung mit mindestens einem auswechselbaren Schneideinsatz und einer Aufnahmetasche für selbstklemmende Befestigung des Schneideinsatzes.

Stand der Technik

Derartige Schneidwerkzeuge sind beispielsweise aus dem ISCAR Prospekt Stech-Dreh-System SELF-GRIP, Ausgabe 1950 Werkstatt und Betrieb 1978, S. 297 bekannt. Sie haben zwei einander gegenüberliegende Sitzbacken mit Anlageflächen der Aufnahmetasche, die komplementär zu den in Arbeitsposition gegenüberliegenden Anlageflächen des Schneideinsatzes ausgebildet sind und mit im Querschnitt konvexen oder konkaven oder dergleichen Führungsmitteln in den Anlageflächen der Aufnahmetasche. Die Aufnahmetaschen dieser bekannten Werkzeuge sind keilförmig ausgebildet. Diese Schneidwerkzeuge haben jedoch den Nachteil, daß der Schneideinsatz oft nicht fest genug sitzt, so daß beim Einfahren des Werkzeuges zum Einstechen oder Abstechen das Werkstück beschädigt werden kann, wenn der Schneideinsatz herausgefallen sein sollte. Ferner ist es schon vorgekommen, daß der Schneideinsatz beim Zurückfahren des Schneidwerkzeuges herausgezogen wurde. Es ist leicht vorstellbar, daß dies zu schweren Schäden sowohl an den Werkstücken als auch an den Drehbänken, Drehmaschinen und Hochleistungs-NC-Automaten, für die diese Werkzeuge vorzugsweise eingesetzt werden, führen kann.

Kennzeichen der Erfindung

Die der Erfindung zugrundeliegende Aufgabe besteht nun darin, ein Schneidwerkzeug mit auswechselbaren Schneideinsätzen zu schaffen, bei dem ein selbstsperrender sicherer Sitz in jedem Fall gewährleistet ist, d. h. bei dem der Schneideinsatz nicht mehr ohne besonderes Werkzeug einfachster Art aus der Aufnahmetasche herausgenommen werden kann. Diese Aufgabe wird dadurch gelöst, daß der Schneideinsatz durch eine Drehung in Richtung der an der Schneidkante angreifenden Kräfte um eine Achse parallel zur Schneidkante in die Aufnahmetasche einsetzbar ist, wobei die Anlageflächen der Aufnahmetasche die Form eines angenäherten Kreisbogens um den Drehpunkt des Schneideinsatzes haben, dessen Abstand vom Drehpunkt in Eindrehrichtung abnimmt, und daß eine Einsetznut in der Tiefe zwischen den Anlageflächen der Aufnahmetasche angeordnet ist und daß ferner am Schneideinsatz ein abgeflachter Abschnitt im Anschluß an die Anlageflächen des Schneideinsatzes vorhanden ist.

Weitere Ausgestaltungen der Erfindung, sind den Unteransprüchen im einzelnen zu entnehmen.

Kurze Beschreibung der Zeichnungen

Die Erfindung wird nunmehr anhand von Ausführungsbeispielen in Verbindung mit den beigefügten Zeichnungen im einzelnen beschrieben.
In den Zeichnungen zeigt :
Figur 1 eine Seitenansicht des Schneidwerkzeuges gemäß der Erfindung.
Figur 2 eine Ansicht von oben.
Figur 3 eine Vorderansicht.
Figuren 4 und 5 einen etwas abgewandelten Schneideinsatz und zugehörige Aufnahmetasche in vergrößertem Maßstab.
Figur 6 das Einsetzen des Schneideinsatzes in die Aufnahmetasche.

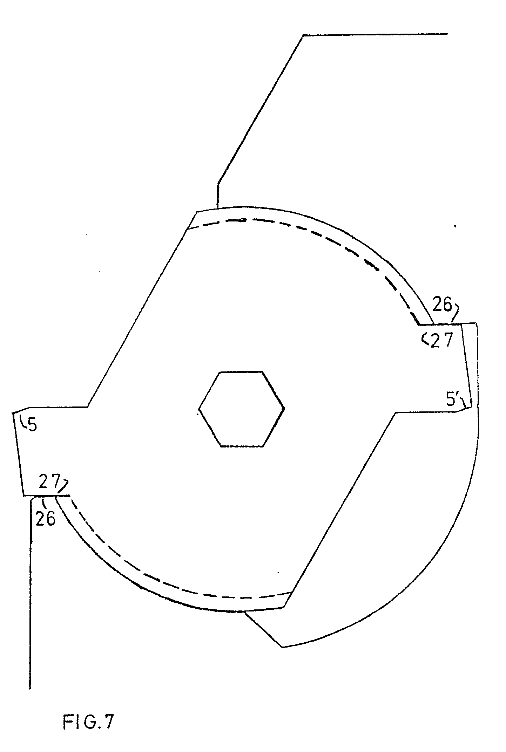

Figur 7 den Schneideinsatz in Arbeitsposition.
Figur 8 eine weitere Ausführungsform der Erfindung anhand eines Anwendungsbeispieles.

Allgemeine Beschreibung der Erfindung

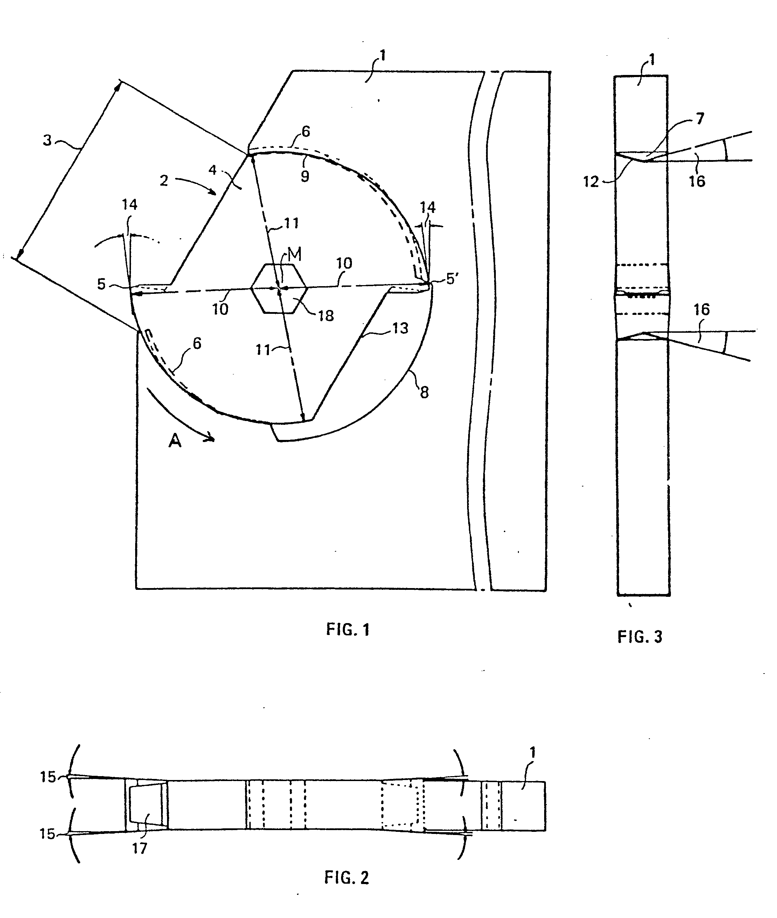

In den Figuren 1, 2 und 3 erkennt man ein Schneidwerkzeug (1) mit einer zum Einsetzen des Schneideinsatzes bestimmten Aufnahmetasche (2), deren Öffnungsweite (3) durch einen nicht bezifferten Maßpfeil angedeutet ist. In diese Aufnahmetasche (2) ist ein Schneideinsatz (4) eingesetzt, der mindestens eine, vorzugsweise aber zwei Schneidkanten (5) und (5') aufweist. Die hier gezeigte Lage ist die Arbeitsposition. Der Schneideinsatz wird mit seiner « Schmalseite » in die Aufnahmetasche (2) eingesetzt. Mit anderen Worten : Der Durchmesser des Schneideinsatzes quer zur Schmalseite ist größer als die Öffnungsweite (3) der Aufnahmetasche (2).
Die Aufnahmetasche (2) hat zwei einandergegenüberliegende Sitzbacken mit Anlageflächen (6) von der Form eines angenäherten Kreisbogens um den Drehpunkt M des Schneideinsatzes (4), dessen Abstand (10, 11) vom Drehpunkt M in Eindrehrichtung des Schneideinsatzes (vgl. Pfeil A) abnimmt. In den Anlageflächen (6) befinden sich negative oder positive Führungsmittel, die der Aufnahme komplementärer Führungsmittel in den Analgeflächen (9) des Schneideinsatzes dienen. Wenn es sich bei den Führungen um Führungsnuten handelt, dann weisen die Anlagenflächen (9) des Schneideinsatzes dazu komplementäre Führungsleisten auf. Diese Führungsnuten bzw. Führungsleisten können beliebige, zueinander komplementäre Querschnitte aufweisen. Diese Querschnitte können beispielsweise dreieckförmig, rechteckig, halbkreisförmig, symmetrisch oder unsymmetrisch sein.
Der Schneideinsatz (4) besitzt ebenfalls zwei Anlageflächen (9) von angenäherter Kreisform um den Drehpunkt M, die in Arbeitsposition eingesetzt komplementär zu den Anlageflächen (6) der Aufnahmetasche ausgebildet sind. Dabei nimmt auch bei den Schneideinsätzen (4) der Abstand der Anlageflächen (9) vom Drehpunkt M beginnend im Anschluß an den Schneidkeil (5) in Eindrehrichtung ab, d. h. der waagerecht verlaufende Abstand (10) der Anlagefläche vom Drehpunkt M ist größer als der von oben nach unten verlaufende Abstand (11).

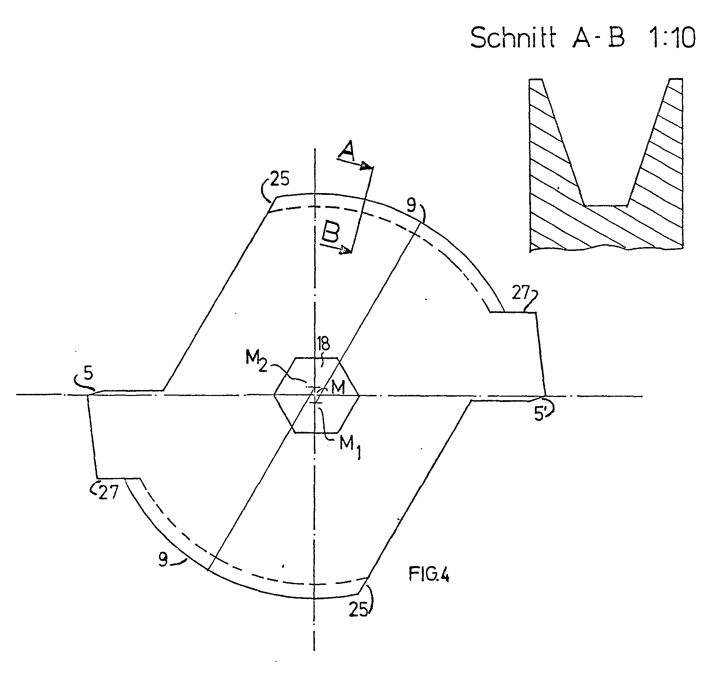

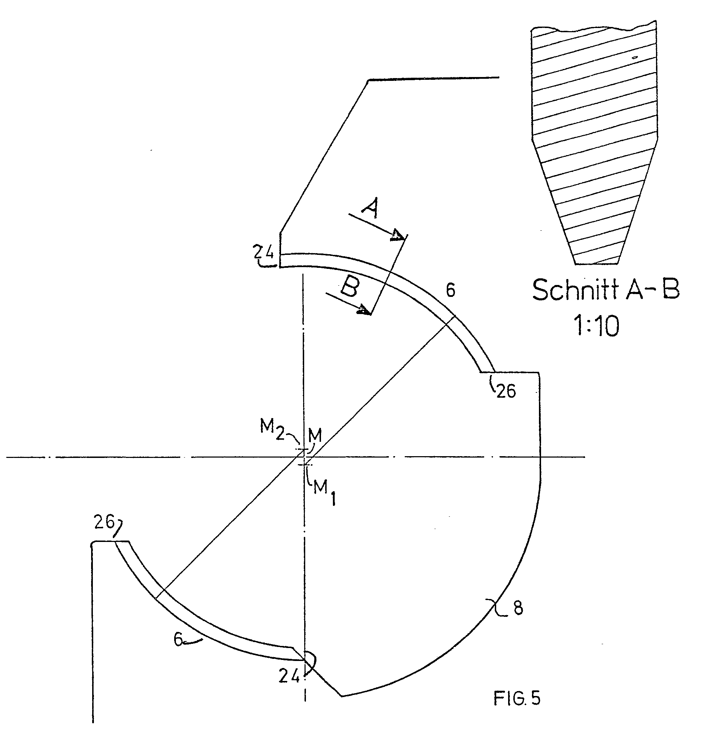

Die Anlageflächen (6) der Sitzbacken und entsprechend die Anlageflächen (9) der Schneideinsätze können auch die Form von zwei exzentrischen Kreisbögen haben, deren Mittelpunkte $M_1$, $M_2$ — jeweils vom Ende (24 bzw. 25) der Anlagefläche ausgesehen — hinter dem Drehpunkt M des Schneideinsatzes liegen (vgl. Figuren 4 und 5). Der Abstand der exzentrischen Mittelpunkte $M_1$ und $M_2$ vom Drehpunkt M entspricht genau der Differenz zwischen dem waagerechten Abstand (10), zwischen dem Mittelpunkt M und den Anlageflächen und dem senkrechten Abstand (11) zwischen dem Mittelpunkt M und den Anlageflächen.

Durch diese Art der Ausgestaltung der Schneideinsätze einerseits und der in den Aufnahmetaschen angeordneten Führung andererseits erhält man nach dem Einsetzen des Schneideinsatzes in die Aufnahmetasche zwischen beiden Teilen einen keilförmigen Spalt. Durch Verdrehen des Schneideinsatzes (4) gegen den Uhrzeigersinn klemmt sich jedoch der Schneideinsatz (4) in der Aufnahmetasche (2) fest und die im Betrieb auf die Schneidkante (5) einwirkenden Kräfte bewirken immer eine Verriegelung und nie ein Lösen des Schneideinsatzes (4).

Aus Figuren 1 und 3 erkennt man ferner die positive Führungsleiste (7) und die negative Führungsnut (12) und den abgeflachten Abschnitt (13), der sich jeweils abgestuft an eine Schneidkante (5), (5') anschließt.

Ferner erkennt man den vorderen Freiwinkel (14) in Figur 1. In Figur 2 sieht man den Hinterschleifwinkel (15) des Schneideinsatzes und in Figur (3) den Winkel (16) der Führungsleiste bzw. Führungsnut, wenn diese in dem gezeigten Ausführungsbeispiel einen dreieckförmigen Querschnitt aufweist. Ferner sieht man in Figur (2) eine muldenförmige Vertiefung (19) in der Spanfläche des Schneideinsatzes etwas hinter der Schneidkante (5); diese Vertiefung dient der Spanverformung.

An der Aufnahmetasche (2) ist vor dem Anfang mindestens einer Anlagefläche (6) ein Endanschlag (26) vorgesehen, gegen den ein korrespondierender Endanschlag (27) des Schneideinsatzes anschlägt, der sich hinter dem Schneidkeil (5) am Anfang mindestens einer Anlagefläche (9) befindet.

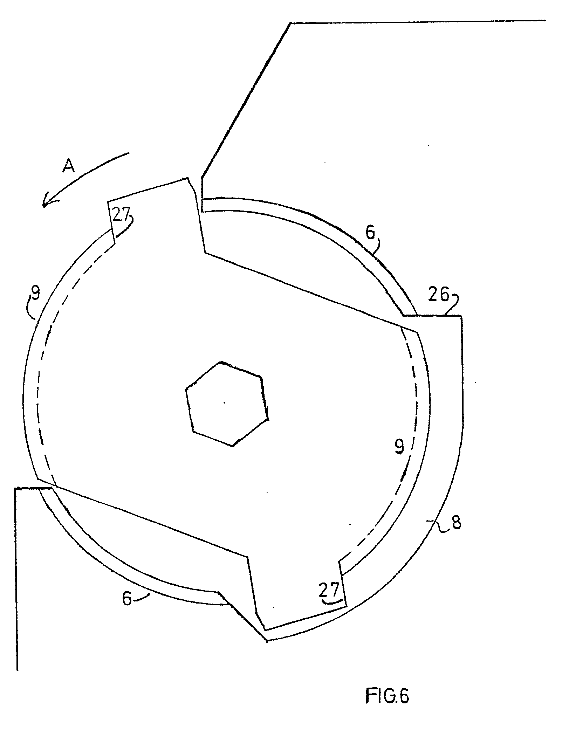

In der Tiefe der Aufnahmetasche (2) befindet sich zwischen den Anlageflächen (6) die Einsetznut (8). Dadurch kann der Schneideinsatz bei der Montage mit seiner Schmalseite tief genug in die Aufnahmetasche eingeführt werden, wie es in Figur 6 gezeigt ist.

Zur Montage besitzt der Schneideinsatz beispielsweise eine Sechskant-Bohrung (18) konzentrisch mit dem Drehpunkt M, so daß die Schneidplatte beim Einsetzen und beim Herausnehmen mit einem Sechskant-Schlüssel eingesetzt und herausgenommen werden kann.

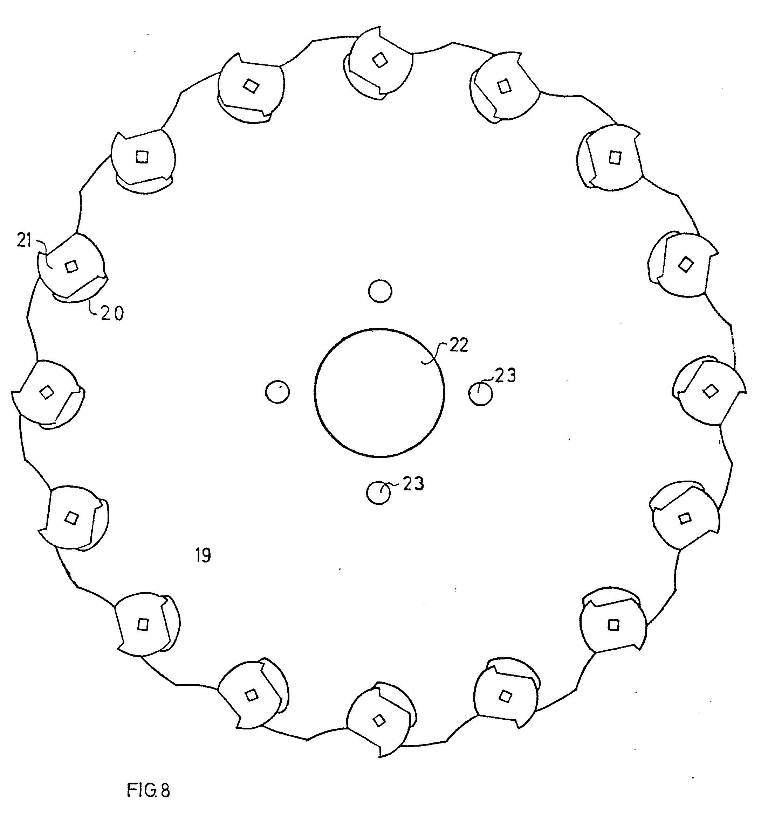

Figur 8 zeigt ein weiteres Beispiel für die Anwendung des Schneidwerkzeuges nach dieser Erfindung am Beispiel eines Scheibenfräsers (19). Dieser Scheibenfräser (19) besitzt an seinem Umfang eine größere Anzahl erfindungsgemäß aufgebauter Aufnahmetaschen (20), in die eine ebenso große Anzahl von Schneideinsätzen (21) eingesetzt ist. Der Scheibenfräser (19) weist eine Mittelbohrung (22) und Montagebohrungen (23) auf.

Das Schneidwerkzeug nach dieser Erfindung hat eine Reihe von Vorteilen. Da der Schneideinsatz vorzugsweise mit zwei Schneidkeilen versehen ist, kann der Schneideinsatz nach Abnutzung der einen Schneide herausgenommen, um 180° gedreht, erneut eingesetzt und weiterverwendet werden. Der Schneideinsatz kann nicht herausfallen, was besonders beim sogenannten Über-Kopf-Arbeiten wichtig ist. Das Schneidwerkzeug mit dem neuen Schneideinsatz eignet sich ganz besonders auch für rotierende Werkzeuge wie z. B. Scheibenfräser und Sägen. Der Schneideinsatz kann außerdem beim Zurückfahren des Schlittens nicht herausgezogen werden. Die großen kreisförmigen Führungsflächen gewährleisten eine große Starrheit der Wirkverbindung zwischen Schneideinsatz und Aufnahmetasche, wodurch sich ein sehr geringes Abweichen des Schneideinsatzes beim Abstechen und Werkzeugeinsatz ergibt.

Ganz wesentlich ist bei dem neuen Schneidwerkzeug, daß keine Hilfsspannvorrichtungen wie Klammern, Bolzen, Spannfinger, Federn und dergleichen erforderlich sind. Auch bei Verwendung in Scheibenfräsern wird der Schneideinsatzt allein schon durch Fliehkraft im Leerlauf in ihrem Endsitz gehalten. Die an den Schneidkanten angreifenden Kräfte wirken in gleicher Richtung.

Durch die Erfindung wurde somit ein neues Schneidwerkzeug geschaffen, das gegenüber den bisher bekannten Schneidwerkzeugen für NC-Maschinen, Drehautomaten, Mehrspindel-Stangenautomaten, Fräs- und Sägemaschinen erhebliche Vorteile aufweist.

Obwohl die Prinzipien dieser Erfindung nur anhand besonderer Anordnungen beschrieben wurden, ist festzuhalten, daß diese nur als Beispiele dienen und den Anwendungsbereich der Erfindung nicht beschränken sollen.

## Ansprüche

1. Schneidwerkzeug für die spanabhebende Bearbeitung mit mindestens einem auswechselbaren Schneideinsatz (4) und mit einer Aufnahmetasche (2) für die selbstklemmende Befestigung des Schneideinsatzes (4) mit zwei einander gegenüberliegenden Sitzbacken mit Anlageflächen (6) der Aufnahmetasche, die komplementär zu den in Arbeitsposition gegenüberliegenden Anlageflächen (9) des Schneideinsatzes (4) ausgebildet sind, und mit im Querschnitt konvexen oder konkaven oder dergleichen Führungsmitteln (7), in den Anlageflächen (6) der Aufnahmetasche und entsprechenden konkaven oder konvexen oder dergleichen Führungsmitteln (12) in den Anlageflächen (9) des Schneideinsatzes, dadurch gekennzeichnet, daß der Schneideinsatz durch eine Drehung um eine Achse (M) parallel zur Schneidkante (5) in Richtung der an der Schneidkante (5) angreifenden Kräfte in die Aufnahmetasche (2) einsetzbar ist, die Anlageflächen (6) der Aufnahmetasche die Form eines angenäherten Kreisbogens um den Drehpunkt M des Schneideinsatzes (4) haben, dessen Abstand (10, 11) vom Drehpunkt in Eindrehrichtung abnimmt, und daß eine Einsetznut (8) in der Tiefe zwischen den Anlageflächen (6) der Aufnahmetasche (2) angeordnet ist und daß ferner am Schneideinsatz (4) ein abgeflachter Abschnitt (13) im Anschluß an die Anlageflächen (9) des Schneideinsatzes vorhanden ist.

2. Schneidwerkzeug nach Anspruch 1, dadurch gekennzeichnet, daß die Anlageflächen (6) der Aufnahmetasche die Form von exzentrischen Kreisbögen haben, deren Mittelpunkte ($M_1$, $M_2$) jeweils vom Ende (24) des Bogens aus gesehen hinter dem Drehpunkt (M) des Schneideinsatzes (4) liegen.

3. Schneidwerkzeug nach Ansprüchen 1 und 2, dadurch gekennzeichnet, daß vor dem Beginn mindestens einer Anlagefläche (6) der Aufnahmetasche (2) ein Endanschlag (26) vorhanden ist.

4. Schneidwerkzeug nach Ansprüchen 1 bis 3, dadurch gekennzeichnet, daß die konvexen Führungsmittel Führungsleisten und die konkaven Führungsmittel Führungsnuten mit dreieckigen, rechteckigen, halbrunden, symmetrischen oder unsymmetrischen Querschnitt sind.

5. Schneidwerkzeug nach Ansprüchen 1 bis 4, dadurch gekennzeichnet, daß am Umfang einer Scheibe (19) eine Anzahl von Aufnahmetaschen (20) für Schneideinsätze (21) angeordnet sind und daß alle diese Schneideinsätze (21) durch Verdrehen in Richtung der im Betrieb an der Schneidkante (5) angreifenden Kraft einspannbar und durch Drehung in der Gegenrichtung lösbar sind.

6. Schneideinsatz für Schneidwerkzeuge nach Ansprüchen 1 bis 5, mit mindestens einem Schneidkeil (5) und zwei einander gegenüberliegenden Anlageflächen (9) des Schneideinsatzes, die komplementär zu den in Arbeitsposition gegenüberliegenden Anlageflächen (6) der Aufnahmetasche (2) ausgebildet sind mit konvexen oder konkaven oder dergleichen Führungsmitteln (12) in den Anlageflächen (9) des Schneideinsatzes dadurch gekennzeichnet, daß die Anlageflächen (9) des Schneideinsatzes die Form eines angenäherten Kreisbogens um den Drehpunkt (M) des Schneideinsatzes haben dessen Abstand (10, 11) vom Drehpunkt (M) beginnend am Schneidkeil (5) abnimmt, und daß im Anschluß an die Anlageflächen (9) des Schneideinsatzes ein abgeflachter Abschnitt (13) vorhanden ist.

7. Schneideinsatz nach Anspruch 6, dadurch gekennzeichnet, daß die Anlageflächen (9) des Schneideinsatzes die Form von zwei exzentrischen Kreisbögen haben, deren Mittelpunkte ($M_1$, $M_2$) jeweils vom Ende (25) der Anlageflächen (9) des Schneideinsatzes aus gesehen, hinter dem Drehpunkt (M) des Schneideinsatzes liegen.

8. Schneideinsatz nach Ansprüchen 6 und 7, gekennzeichnet durch einen Endanschlag (27) am Anfang der Anlageflächen (9) des Schneideinsatzes.

9. Schneideinsatz nach Ansprüchen 6 bis 8, dadurch gekennzeichnet, daß die Führungsmitteln (12) der Anlageflächen (9) des Schneideinsatzes darin bestehen, daß ihr Querschnitt dreieckig, rechteckig, halbrund, symmetrisch oder unsymmetrisch ist.

10. Schneideinsatz nach Ansprüchen 6 bis 9, gekennzeichnet durch eine Mehrkant-Bohrung (18) konzentrisch zur Drehachse (M).

11. Schneideinsatz nach Ansprüchen 6 bis 10, gekennzeichnet durch zwei Schneidkeile (5), (5') jeweils am Anfang einer Anlagefläche (9) des Schneideinsatzes, an welche sich je ein abgeflachter Abschnitt (13) anschließt.

**Claims**

1. A machine cutting tool comprising at least one replaceable cutting insert (4) and a holder (2) for a self-gripping attachment of said cutting insert (4) two seat jaws opposite each other, contact surfaces (6) of the holder which are formed complementary to opposite when in working position, contact surfaces (9) of said cutting insert (4), and in cross-section convex or concave or suchlike guide means (7), in the contact surfaces (6) of the holder and corresponding concave or convex or suchlike guide means (12) in the contact surfaces (9) of the cutting insert, characterized in that said cutting insert is insertable into said holder (2) by being turned about an axis (M) parallel to a cutting edge (5) in the direction of the forces acting on said cutting edge (5), the contact surfaces (6) of the holder have the shape of an approximate circular arc about the center of rotation (M) of said cutting insert (4) whose distance (10, 11) from the center of rotation decreases in the direction of turning, and there is provided an insert groove (8) in the depth of said holder (2) between said contact surfaces (6) of the holder and a flat segment (13) at the cutting insert (4) which is adjacent to said contact surfaces (9).

2. A cutting tool according to claim 1, characterized in that said contact surfaces (6) of the holder have the form of eccentric circular arcs whose centers ($M_1$, $M_2$) seen respectively from the end (24) of the arc, lie behind the center of rotation (M) of said cutting insert (4).

3. A cutting tool according to claims 1 and 2, characterized in that an end stop (26) is provided at said holder (2) before the onset of at least one contact surface (6) of the holder.

4. A cutting tool according to claims 1 to 3, characterized in that the convex guide means are guide tongues and the concave guide means are guide grooves having a triangular, rectangular, semicircular, symmetrical or unsymmetrical cross-section.

5. A cutting tool according to claims 1 to 4, characterized in that at the periphery of a disc (19) there is arranged a plurality of holders (20) for cutting inserts (21) and that all these cutting inserts (21) are fastenable by being turned in the direction of the force acting on the cutting edge (5) during operation, and are detachable by being turned in counter-direction.

6. A cutting insert for cutting tools according to claims 1 to 5, comprising at least one cutting edge (5) and two contact surfaces (9) of the cutting insert opposite each other, which are formed complementary to opposite, when in working position, contact surfaces (6) of said holder (2), and convex or concave or suchlike guide means in the contact surfaces (9) of the cutting insert, characterized in that said contact surfaces (9) of the cutting insert have the form of an approximate circular arc about the center of rotation (M) of said cutting insert whose distance (10, 11) from the center of rotation (M) decreases, starting at a cutting edge (5), and there is a flat segment (13) adjacent to said contact surfaces (9) of the cutting insert.

7. A cutting insert according to claim (6), characterized in that said contact surfaces (9) of the cutting insert have the form of two eccentric circular arcs whose centers ($M_1$, $M_2$) seen from the end (25) of said contact surfaces (9) of the cutting insert, lie behind the center of rotation (M) of said cutting insert.

8. A cutting insert according to claims 6 and 7, characterized by an end stop (27) at the onset of said contact surfaces (9) of the cutting insert.

9. A cutting insert according to claims 6 to 8, characterized in that the guide means (12) of said contact surfaces (9) of the cutting insert are such that their cross-section is triangular, rectangular, semicircular, symmetrical or unsymmetrical.

10. A cutting insert according to claims 6 to 9, characterized by a polygonal bore (18), which is concentric to the axis of rotation (M).

11. A cutting insert according to claims 6 to 10, characterized by two cutting edges (5), (5') at the onset of a contact surface (9) of the cutting insert, a flat segment (13) being attached to each of said cutting edges.

**Revendications**

1. Outil de coupe pour l'usinage par enlèvement de copeaux comportant au moins un élément de coupe (4) interchangeable et une poche réceptrice (2) pour la fixation par auto-blocage de l'élément de coupe (4), comprenant deux mâchoires opposées formant les surfaces d'appui (6) de la poche réceptrice, qui sont agencées de façon complémentaire aux surfaces d'appui (9), en regard dans la position de travail de l'élément de coupe (4), ainsi que des moyens de guidage (7) de section convexe, concave ou analogue dans les surfaces d'appui (6) de la poche réceptrice et des moyens correspondants de guidage concaves, convexes ou analogues (19) dans les surfaces d'appui (9) de l'élément de coupe, caractérisé par le fait que l'élément de coupe peut être mis en place dans la poche réceptrice (2) par une rotation autour d'un axe (M) parallèle à l'arête de coupe (5) dans la direction des forces agissant sur l'arête de coupe (5), les surfaces d'appui (6) de la poche réceptrice ont la forme d'un arc de cercle approximatif centré sur le point de rotation (M) de l'élément de coupe (4), dont la distance (10, 11) par rapport au centre de rotation décroît dans le sens de rotation, qu'une rainure de mise en place (8) est ménagée en profondeur entre les surfaces d'appui (6) de la poche réceptrice (2) et qu'en outre il est prévu sur l'élément de coupe (4) une partie plane (13) se raccordant aux surfaces d'appui (9) de l'élément de coupe.

2. Outil de coupe selon la revendication 1, caractérisé par le fait que les surfaces d'appui (6) de la poche réceptrice ont la forme d'arcs de cercle excentriques dont les points centraux ($M_1$, $M_2$) en partant à chaque fois de l'extrémité (24) de l'arc se trouvent en arrière du centre de rotation (M) de l'élément de coupe (4).

3. Outil de coupe selon les revendications 1 et 2, caractérisé par le fait qu'avant le début d'au moins une surface d'appui (6) de la poche réceptrice (2), il est prévu une butée d'extrémité (26).

4. Outil de coupe selon les revendications 1 à 3, caractérisé par le fait que les moyens convexes de guidage sont des nervures de guidage et les moyens concaves de guidage sont des rainures de guidage ayant une section triangulaire, rectangulaire, semi-circulaire, symétrique ou asymétrique.

5. Outil de coupe selon les revendications 1 à 4, caractérisé par le fait que sur la périphérie d'un disque (19) est disposée une pluralité de poches réceptrices (20) pour des éléments de coupe (21) et que tous ces éléments de coupe (21) peuvent être bloqués par rotation dans la direction de la force s'exerçant en fonctionnement sur l'arête de coupe (5) et peuvent être montés par rotation dans le sens inverse.

6. Elément de coupe pour outils de coupe selon les revendications 1 à 5, comportant au moins un coin de coupe (5) et deux surfaces d'appui opposées (9) de l'élément de coupe, qui sont agencées de façon complémentaire aux surfaces d'appui (6), en regard dans la position de travail, de la poche réceptrice (2), et des moyens de guidage (12) convexes ou concaves ou analogues dans les surfaces d'appui (9) de l'élément de coupe, caractérisé par le fait que les surfaces d'appui (9) de l'élément de coupe ont la forme d'un arc de cercle approximatif centré sur le centre de rotation (M) de l'élément de coupe, dont la distance (10, 11) par rapport au centre de rotation (M) diminue à partir du coin de coupe (5), et qu'il est prévu une partie plane (13) se raccordant aux surfaces d'appui (9) de l'élément de coupe.

7. Elément de coupe selon la revendication 6, caractérisé par le fait que les surfaces d'appui (9) de l'élément de coupe ont la forme de deux arcs de cercle excentriques dont les centres ($M_1$, $M_2$) sont situés chacun, en partant à chaque fois de l'extrémité (25) de la surface d'appui (9) de l'élément de coupe, en arrière du centre de rotation (M) de l'élément de coupe.

8. Elément de coupe selon les revendications 6 et 7, caractérisé par une butée d'extrémité (27) au début des surfaces d'appui (9) de l'élément de coupe.

9. Elément de coupe selon les revendications 6 à 8, caractérisé par le fait que les moyens de guidage (12) des surfaces d'appui (9) de l'élément de coupe sont agencés de manière que leur section soit triangulaire, rectangulaire, semi-circulaire, symétrique ou asymétrique.

10. Elément de coupe selon les revendications 6 à 9, caractérisé par un trou polygonal (18) concentrique à l'axe de rotation (M).

11. Elément de coupe selon les revendications 6 à 10, caractérisé par deux coins de coupe (5, 5') chacun au début d'une surface d'appui (9) de l'élément de coupe et à chacun desquels se raccorde une partie plane (13).

FIG. 1

FIG. 3

FIG. 2

0 058 972

Schnitt A - B 1:10

FIG.4

25  27  5'  9  A  B  18  M  M₁  M₂  25  9  27  5

2

24

A

B

6

26

M₂  M

M₁

26

6

8

24

Schnitt A-B
1:10

FIG.5

FIG.6

FIG.7

FIG. 8